(19) Europäisches Patentamt
European Patent Office
Office européen des brevets

(11) **EP 2 319 736 B1**

(12) **EUROPEAN PATENT SPECIFICATION**

(45) Date of publication and mention
of the grant of the patent:
**05.09.2012 Bulletin 2012/36**

(51) Int Cl.:
***B60R 21/38*** *(2011.01)*     ***B60R 21/013*** *(2006.01)*

(21) Application number: **10014090.4**

(22) Date of filing: **28.10.2010**

(54) **Electronic control apparatus for pop-up engine hood**

Elektronische Steuerung für eine hochfahrbare Motorhaube

Commande électronique pour capot moteur déployable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2009 JP 2009256125**

(43) Date of publication of application:
**11.05.2011 Bulletin 2011/19**

(73) Proprietor: **Keihin Corporation
Shinjuku-ku, Tokyo (JP)**

(72) Inventor: **Hayashi, Kensaku
Shioya-gun
Tochigi-ken (JP)**

(74) Representative: **Eisenführ, Speiser & Partner
Postfach 31 02 60
80102 München (DE)**

(56) References cited:
**DE-A1-102005 008 977     DE-A1-102006 010 750
DE-A1-102006 024 162     DE-A1-102007 028 002**

**Description**

BACKGROUND OF THE INVENTION

Field of the Invention

The present invention relates to an electronic control apparatus.

Description of Related Art

When a moving vehicle hits a pedestrian, a collision occurs between the front bumper of the vehicle and the lower body of the pedestrian. Therefore, there is a danger that a pedestrian may be flipped up on the engine hood of the vehicle and receive an impact to the head, resulting in serious injury. Recently, a vehicle including a pedestrian protection system (a so called pop-up hood system) for alleviating the impact applied to a pedestrian's head by forming a space between the engine hood and the components disposed within the engine compartment by lifting up the rear end of the engine hood when a crash occurs with a pedestrian has been put into practice.

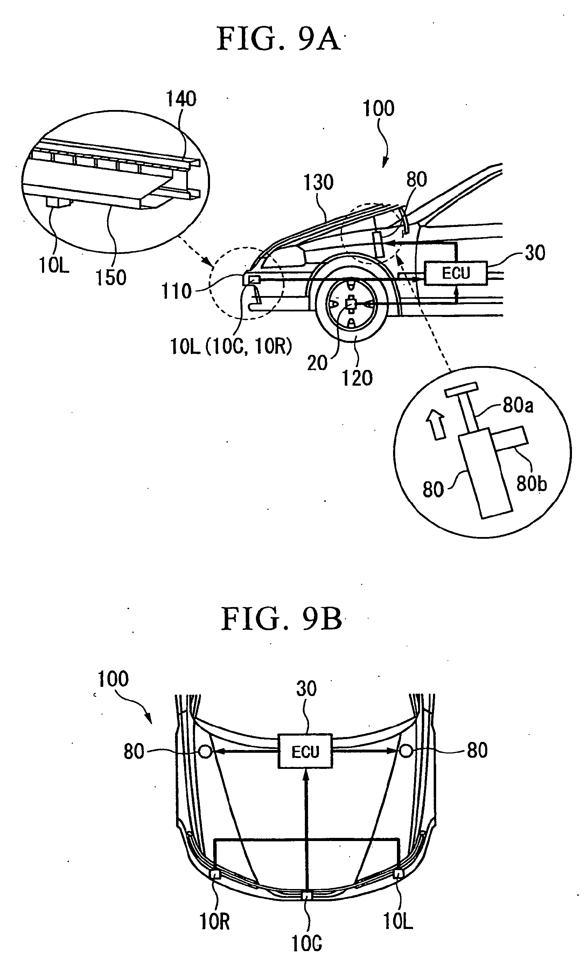

FIGS. 9A and 9B are schematic diagrams illustrating a pedestrian protection system in the conventional techniques. FIG. 9A is a side view illustrating a vehicle 100 including a pedestrian protection system, and FIG. 9B is a top plan view illustrating the vehicle 100. In FIGS. 9A and 9B, it is assumed that the vehicle 100 is a front engine type, in which the engine hood 130 is openably mounted over an engine compartment.

As shown in FIGS. 9A and 9B, the pedestrian protection system includes three pedestrian crash sensors (PCS) 10L, 10C, and 10R provided in the left side, the center, and the right side along the vehicle width direction of the front bumper 110 of the vehicle 100; a vehicle speed sensor 20 provided in the front wheel 120 of the vehicle 100; an electronic control unit (ECU) 30, and a power unit 80 for lifting up the rear end of the engine hood 130.

Inside the front bumper 110, a bumper beam 140 and a safety plate 150 for protecting pedestrian's legs are provided, and the PCSs 10L, 10C, and 10R are provided in the lower portion of the safety plate 150. While the front bumper 110 is typically made of resin, the safety plate 150 is made of an iron plate formed in a shape (e.g., V-shape as shown in FIG. 9A) that can be deformed at the time of a crash to easily absorb crash energy.

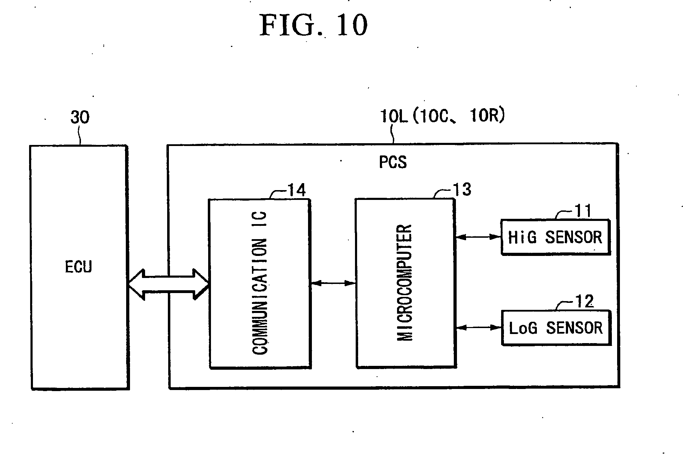

As shown in FIG. 10, each of the PCSs 10L, 10C, and 10R includes a high sensitivity (e.g., ±100 G) acceleration sensor (HiG sensor) 11 for detecting the crash, a low sensitivity (e.g., ±1.5 G) acceleration sensor (LoG sensor) 12 for detection an inclination angle of the front bumper 110, a microcomputer 13, and communication 1C 14 for communicating serial data between the microcomputer 13 and the ECU 30. The microcomputer 13 converts the output signal of the LoG sensor 12 into a digital signal in a period of 80 ms to generate acceleration data (LoG data) and converts the output signal of the HiG sensor 11 into a digital signal in a period of 250 μs to generate acceleration data (HiG data) when the output signal of the HiG sensor 11 exceeds a threshold value.

For example, sensors disclosed in Japanese Unexamined Patent Application, First Publication No. 2006-248270 can be applied to the HiG sensor 11 and the LoG sensor 12.

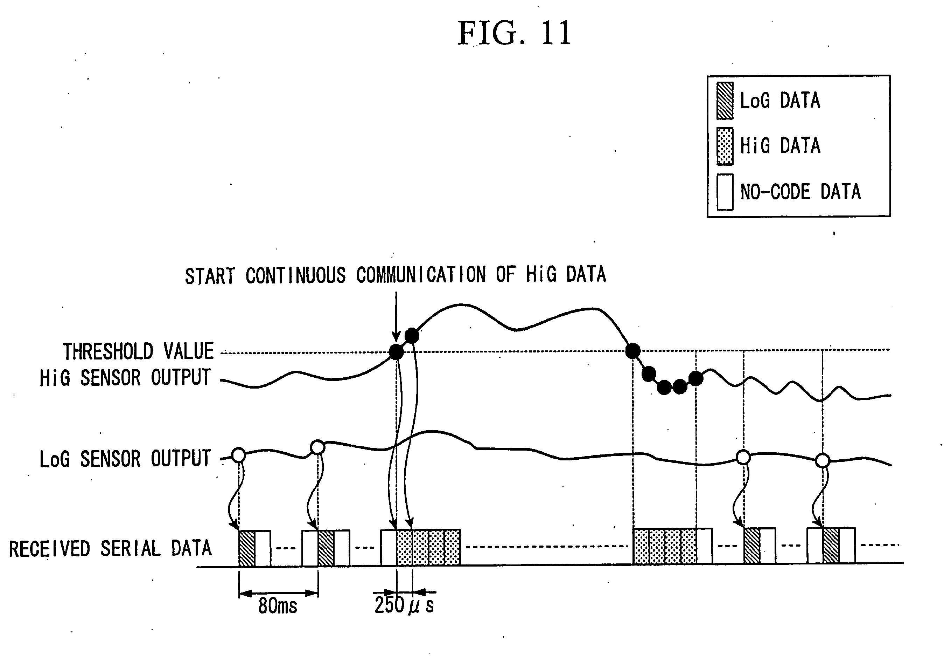

FIG. 11 is a timing chart illustrating a temporal relationship between the output signals of the HiG sensor 11 and the LoG sensor 12 and the serial data transmitted from the communication IC 14 to the ECU 30 (i.e., the serial data received by the ECU 30). As shown in FIG. 11, the serial data received by the ECU 30 include the LoG data communicated in a period of 80 ms and the HiG data continuously communicated in a period of 250 μs when the output signal of the HiG sensor 11 exceeds a threshold value. In addition, in the aforementioned serial data, no-code data (invalid data) are communicated while the LoG data or HiG data are not communicated (otherwise, error code data may be communicated at any timing).

In this manner, the serial data transmitted to the ECU 30 from the PCS 10L, 10C, or 10R include two kinds of G data, including LoG data and HiG data, but do not include identification information such as a unique code for distinguishing both kinds of the data. In this regard, the ECU 30 determines two kinds of G data using the difference of the receiving periods between the LoG data and the HiG data. In other words, the ECU 30 determines the G data received in a period of 80 ms as the LoG data and determines the G data received in a period of 250 μs as the HiG data.

In addition, the ECU 30 monitors the inclination angle of the front bumper 110 based on the LoG data and performs control of the power unit 80 based on the vehicle speed data transmitted from the vehicle speed sensor 20 and the HiG data so as to perform control of the pop-up operation of the engine hood 130. Specifically, in the case where the vehicle speed is equal to or larger than a certain value (e.g., 25 km/h), and the HiG data exceed a crash determination threshold value, the ECU 30 determines that a crash occurs with a pedestrian and operates the power unit 80 so as to pop up the engine hood 130.

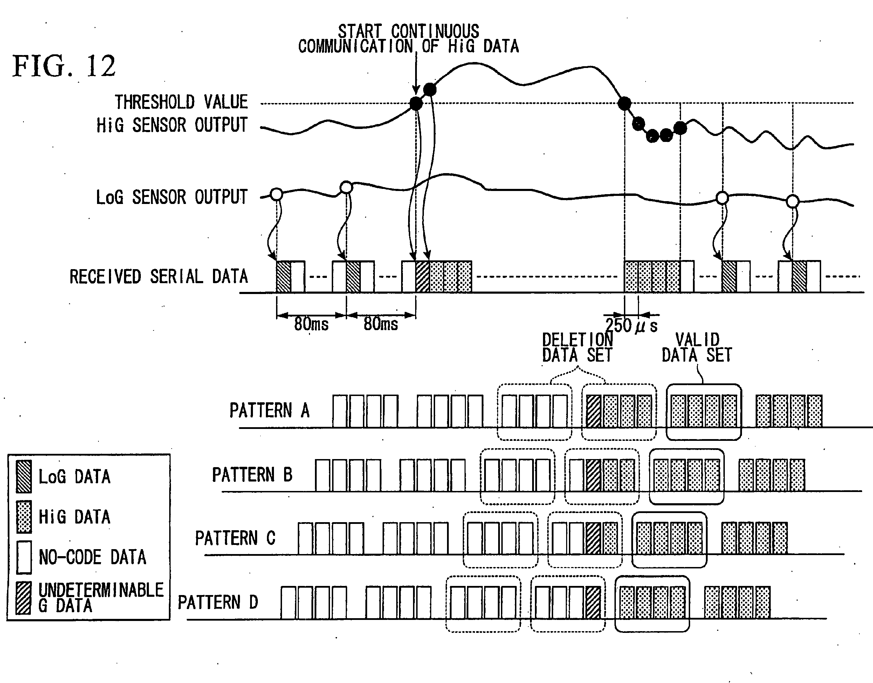

As described above, the ECU 30 in the conventional techniques determines the G data received in a period of 80 ms as the LoG data and determines the G data received in a period of 250 μs as the HiG data. However, as shown in FIG. 12, in the case where a continuous communication of the HiG data is initiated after 80 ms elapse from the timing of receiving the previous LoG data, since the G data initially received out of the G data continuously received after 80 ms elapse from the timing of receiving the previous LoG data have been received in a period of 80 ms, it is possible to determine the initially received G data as the LoG data. However, since the next G data is received in a period of 250 μs, ultimately, it is not possible to determine the initially received G data.

As shown in FIG. 12, in the conventional techniques, the ECU 30 performs sampling of the received serial data in a period of 250 μs, which is the same as the receiving period of the HiG data, and groups four pieces of the sampling data into a single data set for every single millisecond, which is a processing unit time. In the case where the G data that can be determined as the LoG data (initial G data) and the G data that can be determined as the HiG data (subsequent G data) are mixedly present in a single data set for the reason described above (in the cases of the patterns A to D), since determination of the initial G data may be impossible, such a data set is deleted as invalid data.

In other words, in the conventional techniques, only when all of the four pieces of the sampling data within the data set are the G data that can be determined as the HiG data, does the ECU 30 use that data set as the valid data for determining a crash. In such a case, as shown in the patterns A to C of FIG. 12, although valid HiG data exist in a single data set, even the data set including the valid HiG data is deleted, so that there is a risk that the accuracy of crash determination is degraded.

SUMMARY OF THE INVENTION

The present invention has been made to address the aforementioned problems, and provides an electronic control apparatus capable of improving crash determination accuracy between a vehicle and a pedestrian.

In order to achieve the above-described object, according to an aspect of the present invention, there is provided an electronic control apparatus that determines acceleration data received in a first period as low acceleration data and determines acceleration data received in a second period shorter than the first period as high acceleration data, the electronic control apparatus including a data processing unit which deletes acceleration data that can be determined as the low acceleration data in the case where the acceleration data that can be determined as the low acceleration data and the acceleration data that can be determined as the high acceleration data are mixedly present in the received data obtained within a processing unit time.

In the electronic control apparatus according to the present invention, the data processing unit may use, as the high acceleration data, the acceleration data remaining after deleting the acceleration data that can be determined as the low acceleration data from the received data obtained within the processing unit time.

In the electronic control apparatus according to the present invention, in the case where only the acceleration data that can be determined as the low acceleration data are present in the received data obtained within the processing unit time, the data processing unit may use the acceleration data as the low acceleration data.

In the electronic control apparatus according to the present invention, in the case where only the acceleration data that can be determined as the high acceleration data are present in the received data obtained within the processing unit time, the data processing unit may use the acceleration data as the high acceleration data.

In the electronic control apparatus according to the present invention, in the case where the acceleration data that can be determined as the low acceleration data and the acceleration data that can be determined as the high acceleration data are mixedly present in the received data obtained within the processing unit time, the acceleration data that can be determined as low acceleration data is deleted. Therefore, unlike the conventional techniques, the valid high acceleration data present in the received data obtained within the processing unit time can be used in crash determination without deleting them. In other words, in the electronic control apparatus according to the present invention, it is possible to improve crash determination accuracy between a vehicle and a pedestrian.

BRIEF DESCRIPTION OF THE DRAWINGS

FIG. 1 is a block diagram illustrating an electronic control apparatus (ECU 30) according to an embodiment of the present invention.
FIG. 2 is a first explanatory diagram illustrating a principle of determining the G data according to an embodiment of the present invention.
FIG. 3 is a second explanatory diagram illustrating a principle of determining the G data according to an embodiment of the present invention.
FIG. 4 is a flowchart illustrating a process of determining sampling data performed by the CPU 47 of the ECU 30.
FIG. 5 is a flowchart illustrating a process of determining G data performed by the CPU 47 of the ECU 30.
FIG. 6 is flowchart illustrating a process of determining G data performed by the CPU 47 of the ECU 30.
FIG. 7 is a flowchart illustrating a detailed process of the step S47 in a G data determination process.
FIG. 8 is a timing chart for facilitating understanding of a sampling data determination process and a G data determination process.
FIGS. 9A and 9B are schematic configuration diagrams illustrating a pedestrian protection system in the conventional technique.
FIG. 10 is an internal configuration diagram illustrating a pedestrian crash sensor (PCS) used in the pedestrian protection system.
FIG. 11 is an explanatory diagram illustrating the LoG data and HiG data included in the serial data transmitted from the PCS.

FIG. 12 is an explanatory diagram illustrating problems of the conventional technique.

DETAILED DESCRIPTION OF THE INVENTION

Hereinafter, an embodiment of the present invention will be described with reference to the accompanying drawings. In addition, the ECU used in the pedestrian protection system shown in FIGS. 9A and 9B will be described as an electronic control apparatus according to an embodiment of the present invention. However, the ECU according to an embodiment of the present invention is denoted by a reference numeral 40 so as to be distinguished from the ECU 30 of FIGS. 9A and 9B.

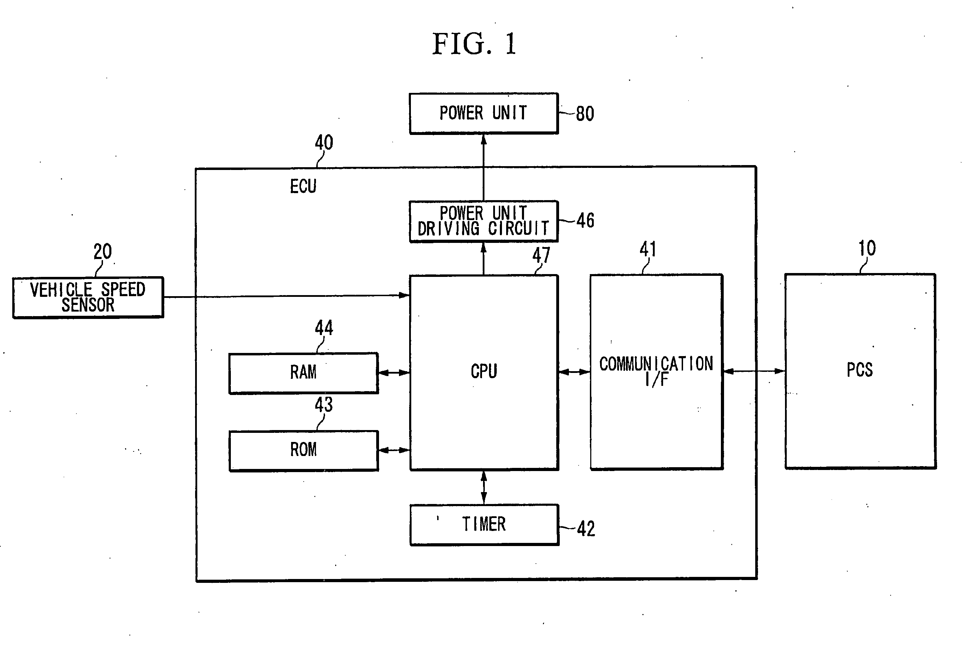

FIG. 1 is a block diagram illustrating the ECU 40 according the embodiment. As shown in FIG. 1, the ECU 40 includes a communication interface (communication I/F) 41, a timer 42, a ROM (Read Only Memory) 43, a RAM (Random Access Memory) 44, a power unit driving circuit 46, and a CPU (Central Processing Unit) 47. In FIG. 1, the PCSs 10L, 10C, and 10R shown in FIGS. 9A and 9B are collectively denoted by a PCS 10.

The communication interface 41 is an interface for implementing a serial communication with the PCS 10. Specifically, the communication interface 41 samples the serial data received from the PCS 10 in response to a sampling request input from the CPU 47 in a period of 250 $\mu$s and outputs the sampling data to the CPU 47. As described in conjunction with FIG. 11, the serial data transmitted from the PCS 10 contain the LoG data (low acceleration data) communicated in a period of 80 ms (first period) and the HiG data (high acceleration data) continuously communicated in a period of 250 $\mu$s (second period) in the case where the output signal of the HiG sensor 11 exceeds a threshold value (also including no-code data or error code data).

The timer 42 performs a time-count operation under the control of the CPU 47, and specifically, performs a countdown with a receiving period counter set to 100 ms. The ROM 43 is a non-volatile memory previously storing various setup data or a control program executed by the CPU 47. The RAM 44 is a volatile working memory used for a temporary storage of data when the CPU 47 performs various operations by executing a control program. The power unit driving circuit 46 generates a driving signal for operating the power unit 80 in response to a power unit operation command signal input from the CPU 47 and outputs the driving signal to the power unit 80.

The CPU 47 (data processing unit) generally controls the pedestrian protection system based on the control program stored in the ROM 43. Specifically, the CPU 47 monitors the inclination angle of the front bumper 110 and performs crash determination with regard to a pedestrian based on the sampling data (LoG data, HiG data or the like) obtained from the communication interface 41 and the vehicle speed data obtained from the vehicle speed sensor 20. If it is determined that a crash has occurred, the CPU 47 operates the power unit 80 by outputting the power unit operation command signal to the power unit driving circuit 46. In addition, the LoG data are used to monitor the inclination angle of the front bumper 110, and the HiG data and the vehicle data are used to determine the occurrence of a crash with a pedestrian.

Although described in detail below, the CPU 47 groups four pieces of the sampling data obtained from the communication interface 41 in a period of 250 $\mu$s, into a single data set for every single millisecond, which is the processing unit time, and performs a sampling data determination process for determining whether the sampling data contained in the data set obtained at every processing unit time is acceleration data (hereinafter, referred to as G data), no-code data or error code data.

Further, the CPU 47 performs a G data determination process for determining whether the G data present in the current data set is LoG data or HiG data based on the result of the sampling data determination process performed at every processing unit time (i.e., in a period of 1 ms) and the result of the time-count of the timer 42 (i.e., remaining time of the receiving period counter). In other words, the G data determination process is also executed for every processing unit time (i.e., in a period of 1 ms).

Next, the operation of the ECU 40 according to the embodiment constructed as described above, particularly, the sampling data determination process and the G data determination process executed by the CPU 47 will be described in detail. First, a principle of determining the G data according to the embodiment will be described as a background before a detailed description is given of the sampling data determination process and the G data determination process.

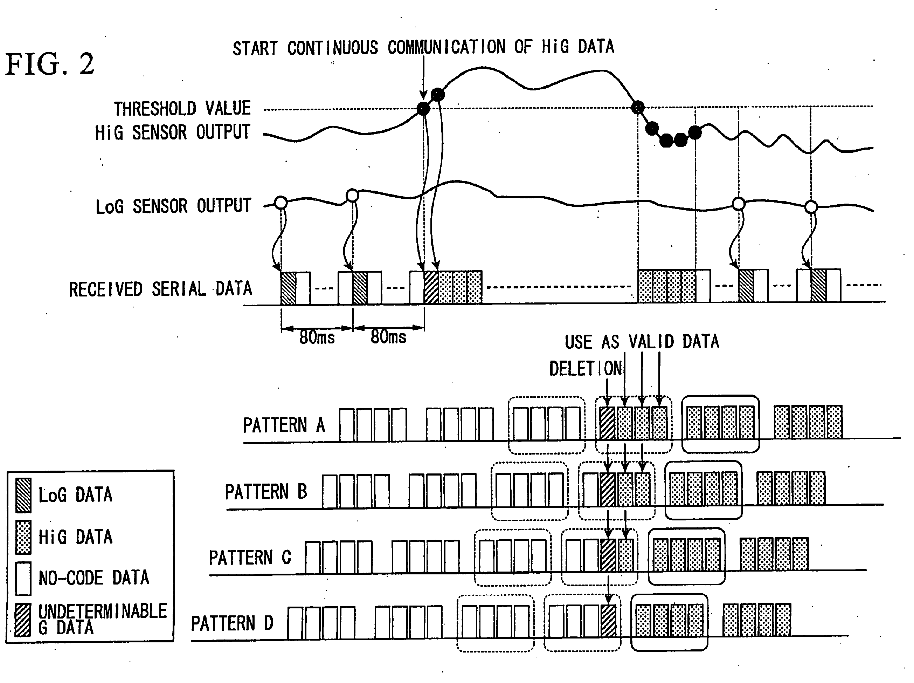

FIG. 2 is a timing chart illustrating a temporal relationship between the output signals of the HiG sensor 11 and the LoG sensor 12 and the serial data received by the ECU 40. Here, as shown in FIG. 2, it is assumed that a continuous communication of the HiG data is initiated after 80 ms elapse from the timing of receiving the previous LoG data. In other words, since the G data initially received out of the G data continuously received after 80 ms elapse from timing of receiving the previous LoG data is received in a period of 80 ms, it is possible to determine the G data as the LoG data. However, since the next G data is received in a period of 250 $\mu$s, ultimately, it may be not possible to determine the initially received G data.

In the embodiment, in the case where the G data that can be determined as the LoG data (initial G data) and the G data that can be determined as the HiG data (subsequent G data) are mixedly present in a single data set (out of the received data obtained within a processing unit time), the CPU 47 deletes only the G data that can be determined as the LoG data, i.e., the initial G data. At this moment, in the case of the patterns A to D of FIG. 2, it is possible to use the valid HiG data present in the data set in the crash determination without deleting the valid HiG data present in the data set and to improve crash determination accuracy.

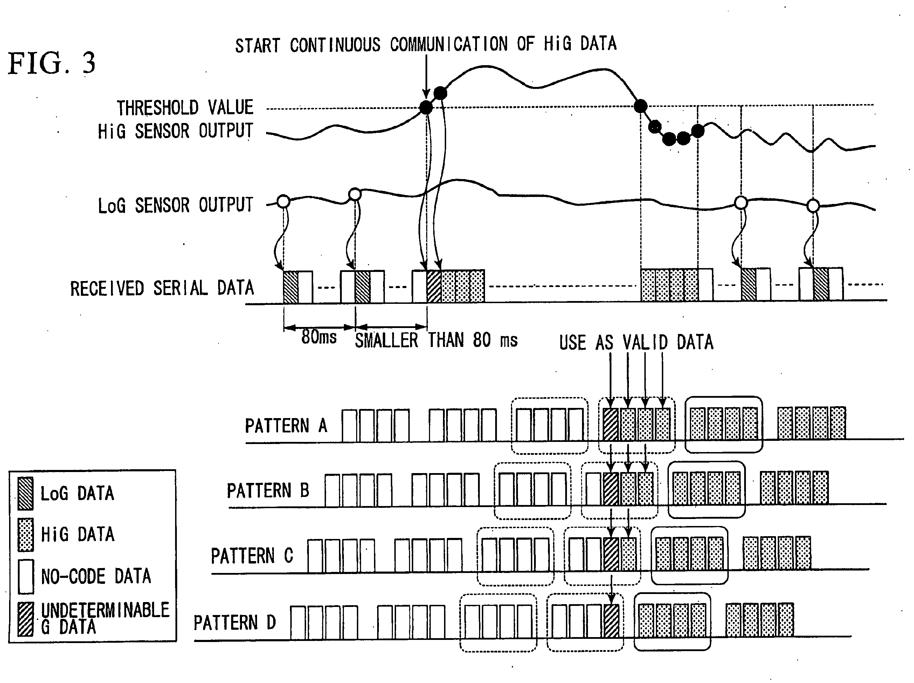

FIG. 3 is a timing chart in the case where a continuous communication of the HiG data is initiated within smaller than 80 ms after the timing of receiving the previous LoG data. In this case, the initial G data does not correspond to the G data that can be determined as the LoG data, and since the next G data is received in a period of 250 $\mu$s, all of the G data present in the data set can be determined as the HiG data. In other words, in the case where only the G data that can be determined as the HiG data exist in a single data set, the CPU 47 uses those G data as the HiG data in the crash determination.

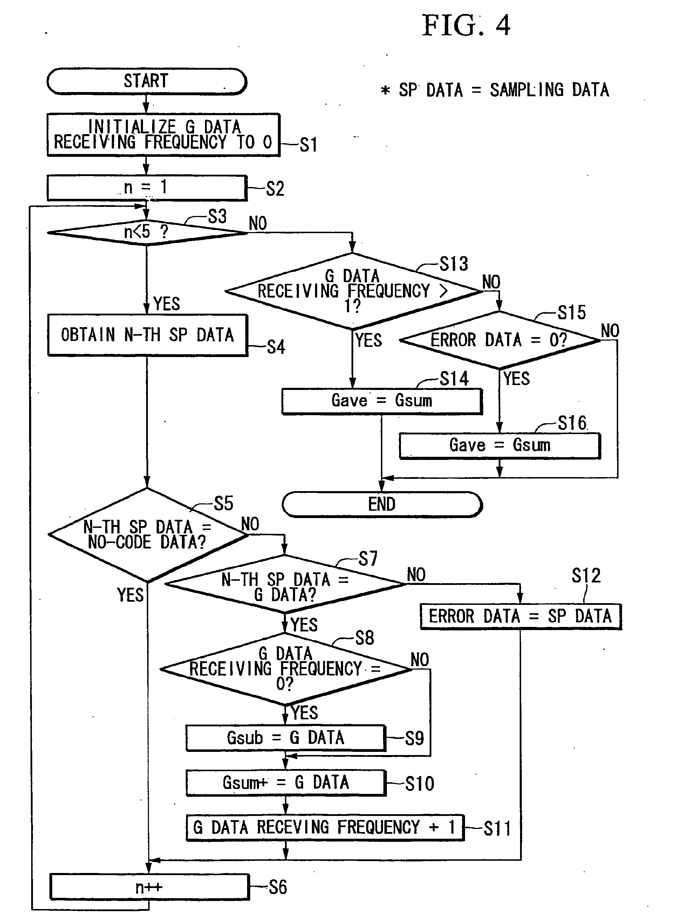

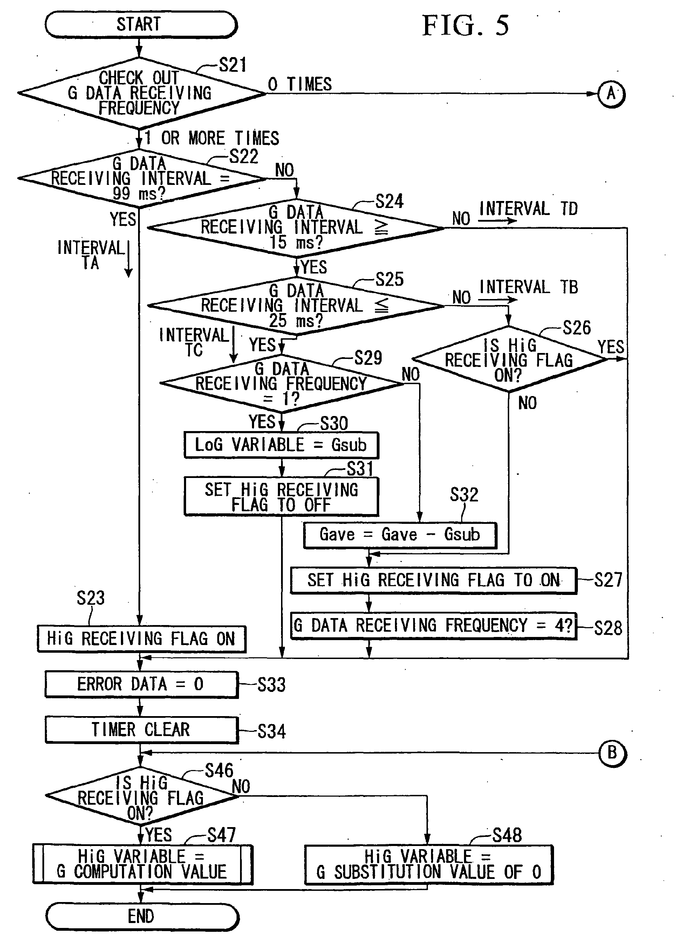

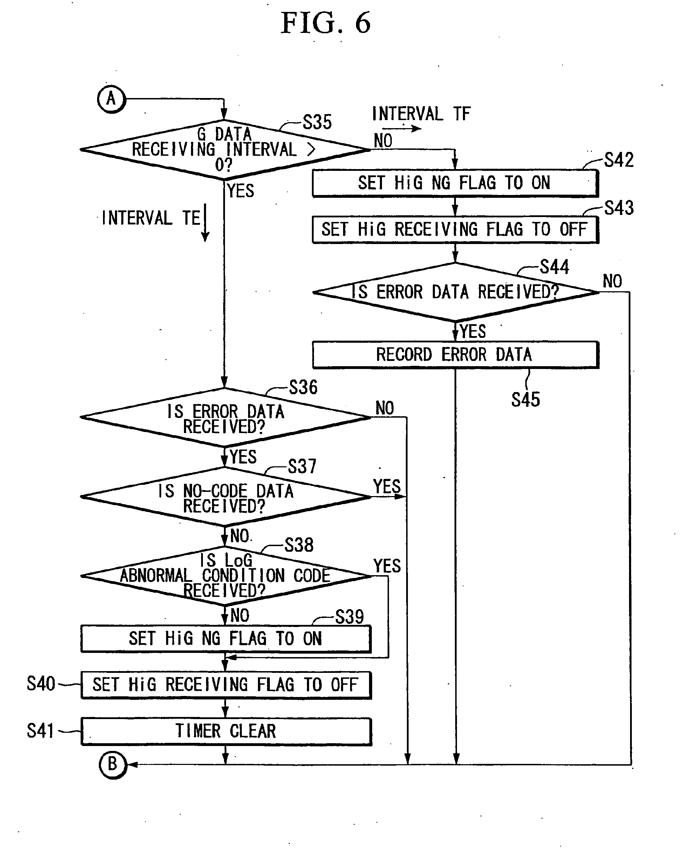

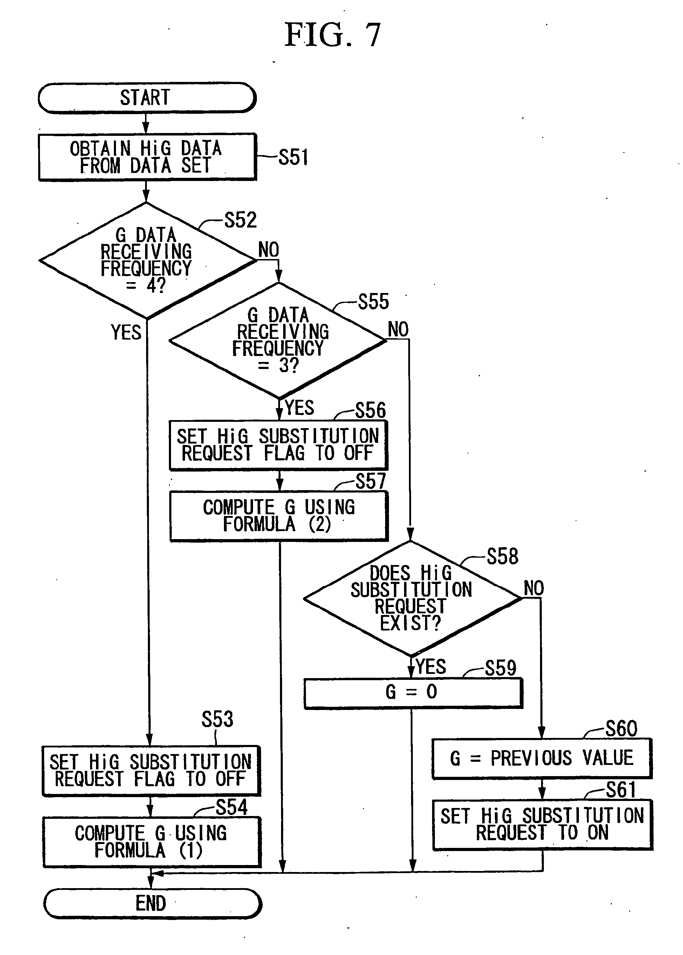

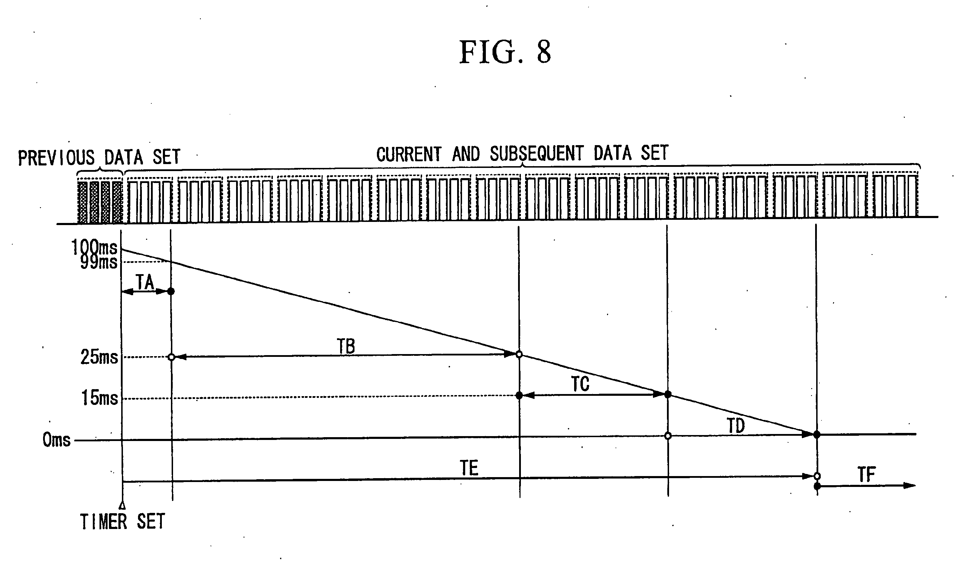

The processing for implementing the principle of determining the G data described above includes the sampling data determination process and the G data determination process. FIG. 4 is a flowchart illustrating the sampling data determination process, and FIGS. 5 and 6 are flowcharts illustrating the G data determination process. FIG. 7 is a flowchart illustrating detailed processing of the step S47 of the G data determination process, and FIG. 8 is a timing chart for facilitating understanding of the sampling data determination process and the G data determination process.

As described above, although the sampling data determination process and the G data determination process are executed in a period of 1 ms, which is a processing unit time, in the following descriptions, as shown in FIG. 8, it is assumed that the LoG data exist in the data set obtained within the previous processing unit time, and the timer 42 initiates a countdown of the receiving period counter set to the 100 ms from the timing of completing obtainment of the final sampling data within this data set. In addition, it is assumed that the timer 42 performs the countdown in units of 1 ms.

However, in the sampling data determination process shown in FIG. 4, first, the CPU 47 initializes the G data receiving frequency to "0" (step S1) and initializes the variable n to "1" (step S2). Then, the CPU 47 determines whether or not the variable n is smaller than "5" (step S3). If the determination result is "YES", the n-th sampling data (n-th SP data) is obtained (step S4). Then, the CPU 47 determines whether or not the n-th sampling data is no-code data (step S5). If the determination result is "YES", the variable n is incremented, and the process returns to the step S3 (step S6).

Meanwhile, if the determination result is "No" in the step S5, i.e., if the n-th sampling data is not the no-code data, the CPU 47 determines whether or not the n-th sampling data is the G data (step S7). If the determination result is "Yes" in the step S7, i.e., if the n-th sampling data is the G data, the CPU 47 determines whether or not the G data receiving frequency is equal to "0" (step S8).

If the determination result is "Yes" in the step S8, the CPU 47 sets the n-th sampling data (G data) as the deletion candidate G data Gsub (step S9). Otherwise, if the determination result is "No", the process advances to step S10. Here, the deletion candidate G data Gsub is the G data that can be determined as the LoG data in the G data determination process of FIG. 5 described below, and also, the G data deleted when the G data that can be determined as the HiG data are mixedly present in the current data set.

The CPU 47 adds the n-th sampling data (G data) to the G data integration value Gsum (step S10) and increments the G data receiving frequency, and the process advances to the step S6 (step S11). Meanwhile, if the determination result is "No" in the step S7, i.e., if the n-th sampling data is not the G data, the CPU 47 determines that the n-th sampling data is the error code data, and the n-th sampling data is set as the error data. Then, the process advances to the step S6 (step S12).

The processing of the steps S3 to S12 is repeated until it is determined as "No" in the step S3 (i.e., repeated four times). As a result, determination is performed for four pieces of the sampling data contained in the current data set.

Meanwhile, if the determination result is "No" in the step S3, i.e., if the variable n becomes 5, the CPU 47 determines whether or not the G data receiving frequency is equal to or larger than "1" (step S 13). If the determination result is "Yes" in the step S 13, the CPU 47 sets the G data integration value Gsum as the variable Gave used in the G data determination process, and the sampling data determination process is terminated (step S14). Meanwhile, if the determination result is "No" in the step S13, the CPU 47 determines whether or not the error data is "0" (step S15). If the determination result is "Yes", the G data integration value Gsum is set as the variable Gave, and then, the sampling data determination process is terminated (step S16). If the determination result is "No", the sampling data determination process is directly terminated.

By repeating the sampling data determination process described above in a period of 1 ms, the result of determining the sampling data, the G data receiving frequency, the deletion candidate G data Gsub, the variable Gave, and each piece of information of the error data can be obtained for each data set.

Subsequently, in the G data determination process shown in FIG. 5, first, the CPU 47 determines whether or not the G data receiving frequency is equal to or larger than "1" (step S21). If the determination result is "Yes", it is determined whether or not the remaining time of the receiving period counter (G data receiving interval) is 99 ms (step S22). If the determination result is "Yes" in the step S22, i.e., if 1 ms elapses (corresponding to the interval TA of FIG. 8) after the countdown of the receiving period counter is initiated, and all of the G data present in the current data set can be determined as the HiG data, then the CPU 47 sets the HiG receiving flag to ON, and the process advances to the step S33 (step S23).

Meanwhile, if the determination result is "No" in the step S22, the CPU 47 determines whether or not the remaining time of the receiving period counter is equal to or larger than 15 ms (step S24). If the determination result is "Yes", it is determined whether or not the remaining time of the receiving period counter is equal to or smaller than 25 ms (step S25). If the determination result is "No" in the step S25, i.e., if the time elapsing after the countdown is initiated is larger than 1 ms and smaller than 75 ms (corresponding to the interval TB of FIG. 8), and all of the G data present in the current data set can be determined as the HiG data, then the CPU 47 determines whether or not the HiG receiving flag is ON (step S26).

If the determination result is "No" in the step S26, i.e., if the HiG receiving flag is OFF, the CPU 47 sets the HiG receiving flag to ON (step S27) and sets the G data receiving frequency to "4", and the process advances to the step S33 (step S28). Meanwhile, if the determination result is "Yes" in the step S26, i.e., the HiG receiving flag is ON, the CPU 47 progresses the process to the step S33.

In addition, if the determination result is "Yes" in the step S25, i.e., if the time elapsing after the countdown is initiated is equal to or larger than 75 ms and equal to or smaller than 85 ms (corresponding to the interval TC of FIG. 8), and the G data initially received in the current data set (deletion candidate G data Gsub) can be determined as the LoG data, then the CPU 47 determines whether or not the G data receiving frequency is equal to "1" (step S29). While the receiving period of the LoG data is 80 ms, the initial G data may be determined as the LoG data if the receiving period of the LoG data has an approximate value equal to or larger than 75 ms and equal to or smaller than 85 ms in consideration of a margin.

If the determination result is "Yes" in the step S29, i.e., if the G data receiving frequency is equal to "1" (in other words, if the deletion candidate G data Gsub can be determined as the LoG data, and only the deletion candidate G data Gsub exist as the G data within the current data set), the CPU 47 sets the deletion candidate G data Gsub as the LoG variable used to monitor the inclination angle of the front bumper 110 in practice (step S30) and sets the HiG receiving flag to OFF, and the process advances to the step S33 (step S31).

Meanwhile, if the determination result is "No" in the step S29, i.e., if the G data receiving frequency is equal to or larger than "2" (in other words, if the deletion candidate G data Gsub can be determined as the LoG data, and the G data that can be determined as the HiG data exist in the current data set), the CPU 47 subtracts the deletion candidate G data Gsub from the variable Gave (i.e., by deleting the G data that can be determined as the LoG data), and sets the value resulting from the subtraction to a new variable Gave, and the process advances to the step S27 (step S32).

If the determination result is "No" in the step S24, i.e., if the time elapsing after the countdown is initiated exceeds 85 ms (corresponding to the interval TD of FIG. 8), the CPU 47 progresses the process to the step S33.

After the steps S22 to S32 corresponding to the intervals TA, TB, TC, and TD of FIG. 8 described above are executed, the CPU 47 resets the error data to "0" (step S33) and resets the receiving period counter of the timer 42, and the process advances to the step S46 (step S34).

Meanwhile, if the determination result is "No" in the step S21, i.e., if the G data receiving frequency is "0", the CPU 47 progresses the process to the step S35 of FIG. 6, and it is determined whether or not the remaining time of the receiving period counter is larger than "0" (step S35). If the determination result is "Yes" in the step S35 (corresponding to the interval TE of FIG. 8), the CPU 47 determines whether or not the error data is received (whether or not the error data is a value excluding "0") (step S36). If the determination result is "Yes" in the step S36, the CPU 47 determines whether or not the no-code data is received (step S37). If the determination result is "No" in the step S36, the process advances to the step S46 of FIG. 5.

If the determination result is "No" in the step S37, the CPU 47 determines whether or not the LoG abnormal condition code is received (step S38). If the determination result is "Yes" in the step S37, the process advances to the step S46 of FIG. 5. In addition, if the determination result is "No" in the step S38, the CPU 47 sets the HiG abnormal condition flag used in troubleshooting of the PCS sensor 10 to ON (step S39). If the determination result is "Yes" in the step S38, the process advances to the step S40. In addition, the CPU 47 sets the HiG receiving flag to OFF (step S40) and resets the receiving period counter of the timer 42, and the process advances to the step S46 of FIG. 5 (step S41).

On the other hand, if the determination result is "No" in the step S35, i.e., if no G data can be received even after 100 ms or more elapse after the countdown is initiated (corresponding to the interval TF of FIG. 8), the CPU 47 sets the HiG abnormal condition flag to ON (step S42) and sets the HiG receiving flag to OFF (step S43). Further, the CPU 47 determines whether or not the error data has been received (whether or not the error data is a value excluding "0") (step S44). If the determination result is "Yes" in the step S44, the CPU 47 records the error data, and the process advances to the step S46 of FIG. 5 (step S45). If the determination result is "No" in the step S44, the process advances to the step S46 of FIG. 5.

Returning to FIG. 5, after the step S34 is executed, or after the steps S35 to S45 corresponding to the intervals TE and TF described in conjunction with FIG. 6 are executed, the CPU 47 determines whether or not the HiG receiving flag is ON (step S46). If the determination result is "Yes", a process of calculating the crash determination data G (G computation value) which is to be set as the HiG variable used in crash determination in practice is performed (step S47). If the determination result is "No", the HiG variable is set to "0" as a substitution value (step S48).

FIG. 7 is a flowchart illustrating, in detail, a crash determination data computation process in the step S47 of the aforementioned G data determination process. As shown in FIG. 7, first, the CPU 47 obtains the G data that can be determined as the HiG data from the current data set (step S51) and determines whether or not the G data receiving frequency is equal to "4" (step S52).

If the determination result is "Yes" in the step S52, i.e., if four pieces of the G data that can be determined as the HiG data can be obtained from the current data set, the CPU 47 sets the HiG substitution request flag to OFF (step S53) and computes the crash determination data G, and then, the crash determination data computation process is terminated (step S54). Specifically, if four pieces of the G data that can be determined as the HiG data are set to D1, D2, D3, and D4, respectively, the crash determination data G in this case can be expressed as the following formula (1).

$$G = D1 + D2 + D3 + D4 = Gave \quad \dots (1)$$

On the other hand, if the determination result is "No" in the step S52, the CPU 47 determines whether or not the G data receiving frequency is equal to "3" (step S55). If the determination result is "Yes" in the step S55, i.e., if three pieces of the G data that can be determined as the HiG data can be obtained from the current data set, the CPU 47 sets the HiG substitution request flag to OFF (step S56) and computes the crash determination data G, and then, the crash determination data computation process is terminated (step S57). Specifically, if three pieces of the G data that can be determined as the HiG data are set to D1, D2, and D3, respectively, the crash determination data G in this case can be expressed as the following formula (2).

$$G = 4 \times \{(D1 + D2 + D3)/3\}$$
$$= 4 \times Gave/3 \quad \dots (2)$$

On the other hand, if the determination result is "No" in the step S55, i.e., if the G data receiving frequency is any one of "2", "1", or "0", the CPU 47 determines whether or not the HiG substitution request flag is set to ON (step S58). If the determination result "Yes" in the step S58, i.e., if the HiG substitution request flag is ON (in other words, if HiG substitution request exists), the CPU 47 sets the crash determination data G to "0" as a substitution value, and then, the crash determination data computation process is terminated (step S59). On the other hand, if the determination result is "No" in the step S58, i.e., if the HiG substitution request flag is OFF, the CPU 47 maintains the previous crash determination data G without change (step S60) and sets the HiG substitution request flag to ON, and then, the crash determination data computation process is terminated (step S61).

As described above, in the ECU 40 according to the embodiment, in the case where the G data that can be determined as the LoG data (initial G data) and the G data that can be determined as the HiG data (subsequent G data) are mixedly present in a single data set (i.e., out of the received data obtained within a processing unit time), only the G data that can be determined as the LoG data, i.e., the initial G data is deleted. Therefore, the valid HiG data present in the data set can be used in the crash determination, and it is possible to improve the crash determination accuracy.

The present invention is not limited to the aforementioned embodiments, but the following modifications can be made. (1) While the aforementioned embodiment has been described by assuming that the LoG data communicated in a period of 80 ms and the HiG data continuously communicated in a period of 250 μs are contained in the serial data transmitted from the PCS 10, these periods are just exemplary, and the present invention may be applied to the case where the LoG data and the HiG data are transmitted in other periods.

(2) While, in the aforementioned embodiment, the sampling data determination process and the G data determination process shown in FIGS. 4 to 7 are used to realize a fundamental principle that only the G data that can be determined as the LoG data, i.e., the initial G data, is deleted in the case where the G data that can be determined as the LoG data and the G data that can be determined as the HiG data are mixedly present in a single data set, such processes are just exemplified for realizing the fundamental principle, and any other process may be used if it can realize the fundamental principle.

(3) The pedestrian protection system shown in FIG. 9 is just an example of a system where the ECU 40 can be applied. The type of the vehicle, and the type and the number of the PCSs 10 are not limited to the system shown in FIG. 9, but the electronic control apparatus according to the present invention may be applied to various systems.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. An electronic control apparatus that determines an acceleration data received in a first period as a low acceleration data and determines an acceleration data received in a second period shorter than the first period as a high acceleration data, the electronic control apparatus comprising:

   a data processing unit (47) which deletes an acceleration data that can be determined as the low acceleration data in the case where the acceleration data that can be determined as the low acceleration data and the acceleration data that can be determined as the high acceleration data are mixedly present in a received data obtained within a processing unit time.

2. The electronic control apparatus according to claim 1, wherein the data processing unit (47) uses, as the high acceleration data, the acceleration data remaining after deleting the acceleration data that can be determined as the low acceleration data from the received data obtained within the processing unit time.

3. The electronic control apparatus according to claim 1 or 2, wherein, in the case where only the acceleration data that can be determined as the low acceleration data are present in the received data obtained within the processing unit time, the data processing unit (47) uses the acceleration data as the low acceleration data.

4. The electronic control apparatus according to any one of claims 1 to 3, wherein, in the case where only the acceleration data that can be determined as the high acceleration data are present in the received data obtained within the processing unit time, the data processing unit (47) uses the acceleration data as the high acceleration data.

## Patentansprüche

1. Elektronische Steuervorrichtung, die Beschleunigungsdaten, die in einer ersten Zeitspanne empfangen werden, als niedrige Beschleunigungsdaten ermittelt und Beschleunigungsdaten, die einer zweiten Zeitspanne, die kürzer als die erste Zeitspanne ist, empfangen werden, als hohe Beschleunigungsdaten ermittelt, wobei die elektronische Steuervorrichtung enthält:

   eine Datenverarbeitungseinheit (47), die Beschleunigungsdaten, die als die niedrigen Beschleunigungsdaten ermittelt werden können, in dem Fall löscht, in dem die Beschleunigungsdaten, die als die niedrigen Beschleunigungsdaten ermittelt werden können, und die Beschleunigungsdaten, die als die hohe Beschleunigungsdaten ermittelt werden können, innerhalb einer Verarbeitungseinheitszeit erhaltenen empfangenen Daten gemischt vorhanden sind.

2. Elektronische Steuervorrichtung nach Anspruch 1, wobei die Datenverarbeitungseinheit (47) als hohe Beschleunigungsdaten die Beschleunigungsdaten verwendet, die nach dem Löschen der Beschleunigungsdaten, die als die niedrigen Beschleunigungsdaten ermittelt werden können, aus den innerhalb der Verarbeitungseinheitszeit erhaltenen empfangenen Daten verbleiben.

3. Elektronische Steuervorrichtung nach Anspruch 1 oder 2, wobei in dem Fall, in dem nur die Beschleunigungsdaten, die als die niedrigen Beschleunigungsdaten ermittelt werden können, in den innerhalb der Verarbeitungseinheitszeit erhaltenen empfangenen Daten vorhanden sind, die Datenverarbeitungseinheit (47) die Beschleunigungsdaten als die niedrigen Beschleunigungsdaten verwendet.

4. Elektronische Steuervorrichtung nach einem der Ansprüche 1 bis 3, wobei in dem Fall, in dem nur die Beschleunigungsdaten, die als die hohen Beschleunigungsdaten ermittelt werden können, in den innerhalb der Verarbeitungseinheitszeit erhaltenen empfangenen Daten vorhanden sind, die Datenverarbeitungseinheit (47) die Beschleunigungsdaten als die hohen Beschleunigungsdaten verwendet.

## Revendications

1. Dispositif électronique de commande, qui détermine une donnée d'accélération reçue dans une première période comme étant une donnée d'accélération petite et détermine une donnée d'accélération reçue dans une deuxième période plus courte que la première période comme étant une donnée d'accélération grande, le dispositif électronique de commande comprenant :

   une unité (47) de traitement de données, qui supprime une donnée d'accélération, qui peut être déterminée comme étant la donnée d'accélération petite, dans le cas où la donnée d'accélération, qui peut être déterminée comme étant la donnée d'accélération petite, et la donnée d'accélération, qui peut être déterminée comme étant la donnée d'accélération grande, sont présentes de manière mélangée dans une donnée reçue obtenue dans un temps unitaire de traitement.

**2.** Dispositif électronique de commande suivant la revendication 1, dans lequel l'unité (47) de traitement de données utilise comme la donnée d'accélération grande la donnée d'accélération restant, après suppression de la donnée d'accélération, qui peut être déterminée comme étant la donnée d'accélération petite, de la donnée reçue obtenue dans le temps unitaire de traitement.

**3.** Dispositif électronique de commande suivant la revendication 1 ou 2, dans lequel, dans le cas où seulement les données d'accélération, qui peuvent être déterminées comme étant la donnée d'accélération petite, sont présentes dans les données reçues obtenues dans le temps unitaire de traitement, l'unité (47) de traitement de données utilise la donnée d'accélération comme étant la donnée d'accélération petite.

**4.** Dispositif électronique de commande suivant l'une quelconque des revendications 1 à 3, dans lequel, dans le cas où seulement les données d'accélération, qui peuvent être déterminées comme étant la donnée d'accélération grande, sont présentes dans les données reçues obtenues dans le temps unitaire de traitement, l'unité (47) de traitement de données utilise la donnée d'accélération comme étant la donnée d'accélération grande.

# FIG. 1

EP 2 319 736 B1

# FIG. 2

EP 2 319 736 B1

# FIG. 3

START CONTINUOUS COMMUNICATION OF HiG DATA

THRESHOLD VALUE
HiG SENSOR OUTPUT

LoG SENSOR OUTPUT

RECEIVED SERIAL DATA

|←— 80ms —→|←— SMALLER THAN 80 ms —→|   USE AS VALID DATA

PATTERN A

| ▨ | LoG DATA |
| ▦ | HiG DATA |
| ☐ | NO-CODE DATA |
| ▧ | UNDETERMINABLE G DATA |

PATTERN B

PATTERN C

PATTERN D

EP 2 319 736 B1

# FIG. 4

* SP DATA = SAMPLING DATA

```
                    START

        INITIALIZE G DATA
     RECEIVING FREQUENCY TO 0  ─ S1

              n = 1            ─ S2

              n<5 ?   ─ S3   NO
                                          G DATA               ─ S13
               │ YES                RECEIVING FREQUENCY >           NO
                                           1?
        OBTAIN N-TH SP DATA  ─ S4                          ─ S15
                                         │ YES        ERROR DATA = 0?   NO
                                                          ─ S14
                                         Gave = Gsum        │ YES
                                                                   ─ S16
                                                          Gave = Gsum

           N-TH SP DATA =  ─ S5
           NO-CODE DATA?    NO                    END

            │ YES      N-TH SP DATA =  ─ S7
                         G DATA?          NO              S12
                                                  ERROR DATA = SP DATA
                          │ YES  ─ S8
                           G DATA
                     RECEIVING FREQUENCY =     NO
                            0?
                          │ YES
                      Gsub = G DATA   ─ S9

                     Gsum+ = G DATA   ─ S10

             G DATA RECEIVING FREQUENCY + 1  ─ S11

              n++                     ─ S6
```

FIG. 5

```
                    ┌──────────────┐
                    │    START     │
                    └──────┬───────┘
                           │
                    ╱──────┴──────╲  S21
                   ╱  CHECK OUT    ╲      0 TIMES
                  ╱ G DATA RECEIVING╲──────────────────────────────────→ (A)
                   ╲   FREQUENCY    ╱
                    ╲──────┬───────╱
                    1 OR MORE TIMES
                           │
                    ╱──────┴──────╲  S22
                   ╱   G DATA      ╲   NO
                  ╱ RECEIVING INTERVAL= ╲──────┐
                   ╲   99 ms?      ╱          │
                    ╲──────┬──────╱           │
                      YES                ╱────┴─────╲  S24
                       │                ╱  G DATA    ╲   NO   INTERVAL TD
                 INTERVAL              ╱ RECEIVING INTERVAL ≧ ╲─────────────→
                   TA                   ╲   15 ms?   ╱
                    │                    ╲────┬─────╱
                    │                      YES
                    │                ╱──────┴─────╲  S25
                    │               ╱   G DATA     ╲   NO   INTERVAL TB
                    │              ╱ RECEIVING INTERVAL ≦ ╲────────────→
                    │               ╲   25 ms?    ╱           │
                    │                ╲─────┬─────╱      ╱──────┴─────╲  S26
              INTERVAL                  YES           ╱   IS HiG     ╲  YES
                TC              ╱───────┴──────╲  S29 ╱ RECEIVING FLAG ╲──→
                 │             ╱   G DATA       ╲  NO ╲    ON?        ╱
                 │            ╱ RECEIVING FREQUENCY ╲──┐ ╲────┬──────╱
                 │            ╲   = 1?          ╱    │      NO
                 │             ╲───────┬───────╱     │       │
                 │               YES   │   S30       │       │
                 │        ┌──────────┴──────────┐   │       │
                 │        │  LoG VARIABLE = Gsub │   │       │
                 │        └──────────┬──────────┘   │       │
                 │                   │   S31        │       │
                 │        ┌──────────┴──────────┐   │       │
                 │        │ SET HiG RECEIVING    │   │       │
                 │        │   FLAG TO OFF        │  S32      │
                 │        └──────────┬──────────┘   │       │
                 │                   │     ┌────────┴────────┐
                 │                   │     │ Gave = Gave - Gsub │
                 │                   │     └────────┬────────┘
                 │                   │              │
                 │                   │    ┌─────────┴──────────────────┐
                 │                   │    │ SET HiG RECEIVING FLAG TO ON │─S27
                 │                   │    └─────────┬──────────────────┘
       S23       │                   │    ┌─────────┴──────────────────┐
        │        │                   │    │ G DATA RECEIVING FREQUENCY = 4? │─S28
  ┌─────┴──────────────┐             │    └─────────┬──────────────────┘
  │ HiG RECEIVING FLAG ON │          │              │
  └─────────┬──────────┘             └──────┬───────┘
            │                                │
            └───────────────┬────────────────┘
                            │
                  ┌─────────┴─────────┐
                  │  ERROR DATA = 0   │─S33
                  └─────────┬─────────┘
                            │
                  ┌─────────┴─────────┐
                  │   TIMER CLEAR     │─S34
                  └─────────┬─────────┘
                            │                              ─────→ (B)
                            │
                     ╱──────┴──────╲  S46
                    ╱   IS HiG      ╲  NO
                   ╱ RECEIVING FLAG  ╲──────────────────┐
                    ╲    ON?        ╱                   │
                     ╲──────┬──────╱                    │
                       YES   │  S47                     │  S48
            ┌───────────────┴───────────┐   ┌───────────┴──────────────┐
            │   HiG VARIABLE =          │   │   HiG VARIABLE =         │
            │ G COMPUTATION VALUE       │   │ G SUBSTITUTION VALUE OF 0│
            └───────────────┬───────────┘   └───────────┬──────────────┘
                            └──────────┬─────────────────┘
                                       │
                               ┌───────┴───────┐
                               │     END       │
                               └───────────────┘
```

# FIG. 6

# FIG. 7

```
                        START
                          │
                          ▼
              ┌──────────────────────┐
              │  OBTAIN HiG DATA     │─── S51
              │  FROM DATA SET       │
              └──────────────────────┘
                          │
                          ▼
                    ╱─────────────╲  ── S52
                   ╱   G DATA      ╲
                  ╱  RECEIVING      ╲   NO
                  ╲  FREQUENCY      ╱──────────┐
                   ╲   = 4?        ╱           │
                    ╲─────────────╱            ▼
                     │ YES              ╱─────────────╲ ── S55
                     │                 ╱   G DATA      ╲
                     │                ╱  RECEIVING      ╲  NO
                     │                ╲  FREQUENCY      ╱──────────┐
                     │                 ╲   = 3?        ╱           │
                     │                  ╲─────────────╱            │
                     │                   │ YES  ── S56             │
                     │          ┌──────────────────────┐          │
                     │          │ SET HiG SUBSTITUTION │          │
                     │          │ REQUEST FLAG TO OFF  │          │
                     │          └──────────────────────┘          │
                     │                   │  ── S57                 │
                     │          ┌──────────────────────┐          │
                     │          │ COMPUTE G USING      │          ▼
                     │          │ FORMULA (2)          │    ╱─────────────╲ ── S58
                     │          └──────────────────────┘   ╱  DOES HiG     ╲
                     │                   │                 ╱ SUBSTITUTION    ╲ NO
                     │                   │                 ╲  REQUEST        ╱────┐
                     │                   │                  ╲  EXIST?       ╱     │
                     │                   │                   ╲─────────────╱      │
                     │                   │                    │ YES  ── S59       │
                     │                   │          ┌──────────────────────┐     │
                     │                   │          │      G = 0           │     │
                     │                   │          └──────────────────────┘     │
              S53    │                   │                   │                    ▼
   ┌──────────────────────┐             │                   │      ┌──────────────────────┐ ── S60
   │ SET HiG SUBSTITUTION │             │                   │      │  G = PREVIOUS VALUE  │
   │ REQUEST FLAG TO OFF  │             │                   │      └──────────────────────┘
   └──────────────────────┘             │                   │                 │  ── S61
              │  ── S54                  │                   │      ┌──────────────────────┐
   ┌──────────────────────┐             │                   │      │ SET HiG SUBSTITUTION │
   │ COMPUTE G USING      │             │                   │      │ REQUEST TO ON        │
   │ FORMULA (1)          │             │                   │      └──────────────────────┘
   └──────────────────────┘             │                   │                 │
              │                          └───────────────────┴─────────────────┘
              ▼
           END
```

FIG. 8

# FIG. 9A

# FIG. 9B

# FIG. 10

# FIG. 11

EP 2 319 736 B1

| | |
|---|---|
| ▨ | LoG DATA |
| ▨ | HiG DATA |
| ☐ | NO-CODE DATA |

START CONTINUOUS COMMUNICATION OF HiG DATA

THRESHOLD VALUE

HiG SENSOR OUTPUT

LoG SENSOR OUTPUT

RECEIVED SERIAL DATA

80ms

250 μs

FIG. 12

START CONTINUOUS
COMMUNICATION OF HiG DATA

THRESHOLD VALUE
HiG SENSOR OUTPUT

LoG SENSOR OUTPUT

RECEIVED SERIAL DATA

80ms  80ms

250μs

DELETION          VALID
DATA SET          DATA SET

PATTERN A

PATTERN B

PATTERN C

PATTERN D

LoG DATA

HiG DATA

NO-CODE DATA

UNDETERMINABLE
G DATA

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006248270 A